# EUROPEAN PATENT APPLICATION

(11) **EP 2 107 287 A2**
(43) Date of publication of application: **07.10.2009**
(21) Application number: 09157349.3
(22) Date of filing: 03.04.2009
(51) Int. Cl.: F16K 47/02

(54) **Silencer for a water dispensing device, in particular for a flush tank fill valve or a similar device**

(30) Priority: 04.04.2008 IT MI20080593
(71) Applicant: SOPLASNOR - Sociedade de Plasticos do Norte, S.A., Leca da Palmeira (PT)
(72) Inventor: Gameiro Lopes, Antonio Manuel, 3040 Assafarge (Coimbra) (PT); Costa, Vitor, 3810-193 Aveiro (PT); Gonçalves da Costa, Andreia Cristina, 3800-008 Aveiro (PT)
(74) Representative: Jorio, Paolo

(57) **Abstract**

A silencer (10), in particular for a flush tank fill valve (1) or other similar water dispensing device, has a casing (12) having an inner chamber (13), which extends along an axis (A) and has two openings (14, 15) located at respective opposite ends of the chamber (13) and connectable to respective pipes; between each opening (14, 15) and the chamber (13), there is a sharp change in cross section, due to each of the openings (14, 15) having a cross section area significantly smaller than the cross section area of the chamber (13); and the casing (12) is inserted along a feed branch (8) supplying water to the fill valve (1), upstream from the fill valve (1) in the water flow direction.

## Description

The present invention relates to a silencer for a water dispensing device.

More specifically, the silencer according to the invention may be applied to a flush tank fill valve or another similar device, to which the following description refers purely by way of example. It is understood that the silencer may also be applied to other water dispensing devices, such as valves and taps in general.

As is known, lavatory flush tanks are normally equipped with fill valves connected to the water mains, and by which the tank is filled after each flush. Reducing the noise produced by inflow of water through the fill valve is a common problem, and numerous types of fill valves are known comprising silencers.

Known solutions, however, are fairly complicated and/or expensive to produce, or are not fully satisfactory in terms of noise reduction.

Moreover, in known technology, the silencers are normally built into and therefore manufactured together with the fill valves.

However, as each type of fill valve, and even the same type of valve operating in different conditions, produce different types of noise, the silencer, for it to be fully effective, should be designed for each specific installation. In other words, the silencer should be selectable for fitment to a particular fill valve according to both the type of valve and operating conditions.

It is an object of the present invention to provide a silencer for a water dispensing device, in particular for a flush tank fill valve or a similar device, designed to eliminate the above drawbacks of the known art. More specifically, it is an object of the invention to provide a silencer that is fully effective in reducing noise, while at the same time being cheap and easy to produce. Another object of the invention is to provide a silencer which, being cheap and easy to produce with specific operating characteristics for different applications, can be applied to different fill valves operating in different conditions, as well as to other water dispensing devices (valves and taps in general).

The present invention therefore relates to a silencer for a water dispensing device, in particular a flush tank fill valve or similar, as defined in general terms in the accompanying Claim 1, and in more specific terms in the dependent Claims.

The silencer according to the invention is fully effective in reducing noise, while at the same time being cheap and easy to produce.

The silencer according to the invention may be designed for different types of fill valves or other water dispensing devices, and/or for specific operating conditions.

The silencer may either be built into a fill valve or other water dispensing device, or form part of a separately supplied installation kit. The silencer may therefore be installed, for example, on a supply pipe of the fill valve or similar dispensing device.

A number of non-limiting embodiments of the invention will be described by way of example with reference to the accompanying drawings, in which:
Figure 1 shows a schematic of a flush tank fill valve equipped with a silencer in accordance with the invention;
Figure 2 shows a longitudinal section of the silencer according to the invention;
Figure 3 shows a different application of the silencer according to the invention, applied to an up-feed fill valve.

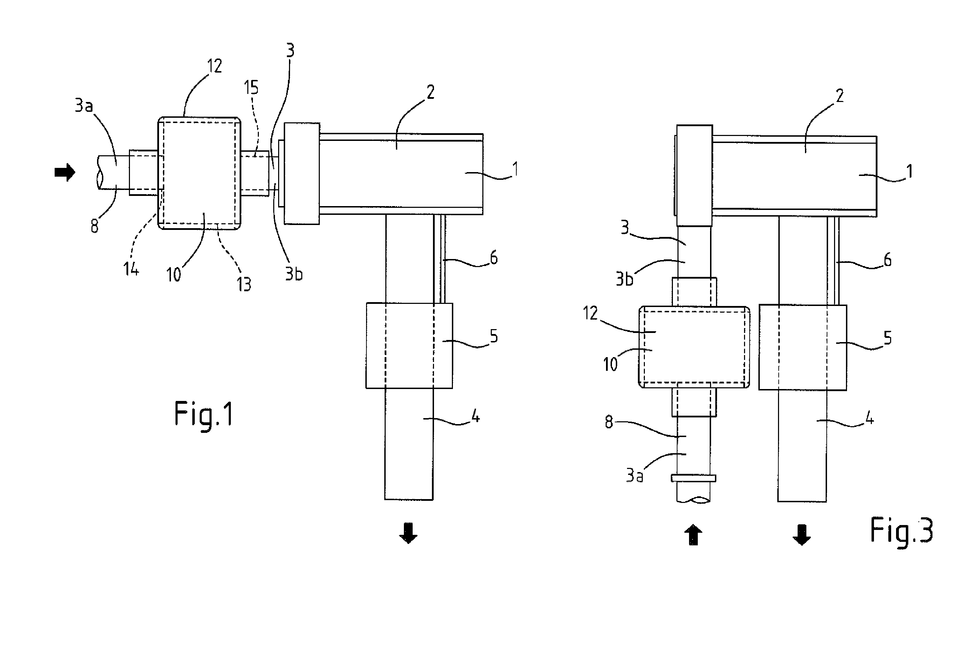

Number 1 in Figure 1 indicates as a whole a fill valve for a known flush tank (not shown). Fill valve 1 comprises a body 2 housing a known (e.g. diaphragm type) valve assembly; an inlet pipe 3 connected to the water mains to feed water into body 2; and an outlet pipe 4, along which water flows from body 2 into the tank. In the non-limiting example in Figure 1, fill valve 1 is fed from the side, inlet pipe 3 is substantially horizontal, and outlet pipe 4 is substantially vertical (and perpendicular to inlet pipe 3). Outlet pipe 4 is fitted with a sliding float 5 connected mechanically by a rod 6 to a control lever of the valve assembly.

Fill valve 1 is equipped with a silencer 10 fitted to inlet pipe 3. More specifically, silencer 10 is interposed between two portions 3a, 3b of inlet pipe 3.

Silencer 10 is in any case inserted or insertable along a feed branch 8 supplying water to fill valve 1, upstream from fill valve 1 in the water flow direction.

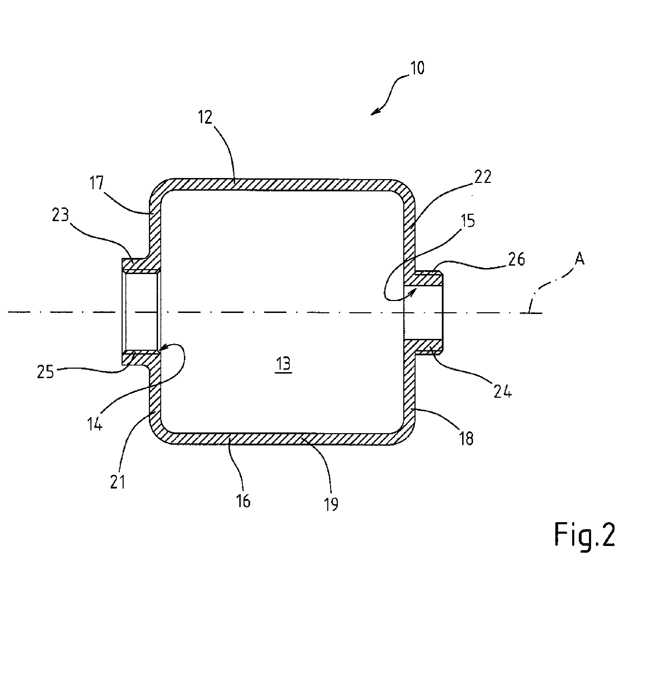

With reference also to Figure 2, silencer 10 comprises a casing 12 having an inner chamber 13, which extends along an axis A and has two openings 14, 15 at opposite ends of chamber 13 and connectable to respective pipes. Opening 14 is an inlet opening connected to portion 3a of inlet pipe 3, and opening 15 is an outlet opening connected to portion 3b of inlet pipe 3.

More specifically, casing 12 comprises a tubular body 16 extending along and about axis A; and two covers 17, 18 at opposite axial ends of body 16 to close chamber 13. Body 16, for example, is cylindrical with a circular cross section, but may have a different, e.g. oval, cross section, or be of a different shape, e.g. prismatic with a polygonal cross section.

Covers 17, 18 are substantially flat, in the form of perforated disks, and have respective, e.g. circular, central, through holes defining openings 14, 15. Openings 14, 15 may also be other than circular in shape as described in (e.g. oval or polygonal).

Body 16 and covers 17, 18 may be formed in one piece to form casing 12, or may be separate parts assembled to form casing 12.

Chamber 13 is bounded by a lateral wall 19 of body 16, extending about axis A; and by two axially opposite end walls 21, 22 substantially perpendicular to axis A, defined by covers 17, 18, and therefore having respective openings 14, 15.

In the example shown, being bounded by lateral wall 19, which is substantially cylindrical, chamber 13 has a substantially constant cross section along axis A. As stated, however, body 16 and chamber 13 may be of a different shape, e.g. the cross section of chamber 13 may be polygonal, oval, etc.

Openings 14, 15 are located at opposite axial ends of chamber 13, substantially face one another, and, more specifically, are substantially aligned along axis A.

Casing 12 comprises an inlet sleeve 23 and an outlet sleeve 24, which communicate with chamber 13 via inlet opening 14 and outlet opening 15 respectively.

Sleeves 23, 24 project outwards of chamber 13 from end walls 21, 22, and are substantially parallel to axis A.

Sleeves 23, 24 have connecting members 25, 26, e.g. defined by respective threaded portions, for connection to respective pipes, and more specifically to portions 3a, 3b of inlet pipe 3.

Between each opening 14, 15 and chamber 13, there is a sharp change in cross section.

That is, each opening 14, 15 has a cross section (perpendicular to axis A) of a much smaller area than the cross section (measured perpendicular to axis A) of chamber 13.

Water inlet and outlet openings 14, 15 may have cross sections of the same or different areas; and inlet opening 14 may be larger than, the same size as, or smaller than outlet opening 15.

End walls 21, 22 being substantially perpendicular to axis A, and openings 14, 15 being formed through end walls 21, 22, chamber 13 is connected to sleeves 23, 24 by respective right-angle constrictions defined by respective sharp changes in cross section.

Chamber 13 constitutes a void, all of which permits passage of water and has no partitions or other internal members.

For effective noise reduction using silencer 10, the most significant parameters have been found to be:
- the ratio between the cross section area of inner chamber 13 of casing 12 and the cross section area (measured perpendicular to axis A) of each of water inlet and outlet openings 14, 15; and
- the axial length of chamber 13 (measured along axis A).

As stated, the cross sections of water inlet and outlet openings 14, 15 may be of equal or different areas, providing they are significantly smaller than the cross section area of chamber 13.

The noise-reducing effect depends on the frequency of the noise produced by each fill valve in each specific operating condition. Different fill valves and identical fill valves operating in different conditions produce noise of different frequencies. Silencer 10 according to the invention is therefore produced, in particular sized, by selecting the above parameters to achieve maximum effectiveness in the specific operating conditions involved.

The sharp expansion and contraction of the water flowing through silencer 10 produce sound waves travelling in opposite directions, and which, on clashing, attenuate the noise produced when filling the tank.

Purely by way of example, the cross section area of chamber 13 is at least roughly twice, and preferably at least 70 times, the cross section area of each opening 14, 15.

The ratio between the cross section area of chamber 13 and the cross section area of each opening 14, 15 roughly ranges between 2 and 400, and preferably between roughly 2 and 70.

The axial length of chamber 13 roughly ranges between 20 mm and 500 mm.

As stated, the best characteristic parameters and dimensions of silencer 10 can be determined for each application, which means the values indicated herein are intended as purely indicative and non-limiting.

Silencer 10 is installed upstream from fill valve 1 in the water flow direction, and may be either built into the structure of fill valve 1, or formed separately from fill valve 1 and installed on inlet pipe 3 or in any position along feed branch 8 of fill valve 1.

Silencer 10 can be applied to fill valves other than the type described herein purely by way of example. In Figure 3, for example, in which details similar or identical to those described are indicated using the same reference numbers, silencer 10 is applied to an up-feed fill valve 1. Silencer 10 is again fitted along inlet pipe 3, and more specifically is interposed between two portions 3a, 3b of inlet pipe 3, which in this case is vertical and substantially parallel to outlet pipe 4.

Clearly, other changes may be made to the silencer as described and illustrated herein without, however, departing from the scope defined in the accompanying Claims.

## Claims

1. A silencer (10) for a water dispensing device (1), in particular a flush tank fill valve or a similar device, the silencer comprising a casing (12) having an inner chamber (13), which extends along an axis (A) and has two openings (14, 15) located at respective opposite ends of the chamber (13) and connectable to respective pipes; the silencer being **characterized by** a sharp change in cross section between each opening (14, 15) and the chamber (13).

2. A silencer as claimed in Claim 1, **characterized in that** each of the openings (14, 15) has a cross section area significantly smaller than the cross section area of the chamber (13).

3. A silencer as claimed in Claim 1 or 2,
**characterized in that** the casing (12) comprises an inlet sleeve (23) and an outlet sleeve (24), which have said openings (14, 15) and communicate with the chamber (13); the chamber (13) being connected to the sleeves (23, 24) by respective constrictions defined by respective sharp changes in cross section.

4. A silencer as claimed in Claim 3, **characterized in that** the sleeves (23, 24) are substantially parallel to the axis (A) and perpendicular to respective axial end walls (21, 22) of the casing (12).

5. A silencer as claimed in one of the foregoing Claims, **characterized in that** the chamber (13) is bounded by a lateral wall (19) extending about the axis (A), and by two axially opposite end walls (21, 22) substantially perpendicular to the axis (A); the openings (14, 15) being formed through said end walls (21, 22).

6. A silencer as claimed in one of the foregoing Claims, **characterized in that** the openings (14, 15) are located at respective axially opposite ends of the chamber (13), and substantially face one another.

7. A silencer as claimed in one of the foregoing Claims, **characterized in that** the casing (12) is inserted or insertable along a feed branch (8) supplying water to the dispensing device (1), upstream from the dispensing device (1) in the water flow direction.

8. A silencer as claimed in one of the foregoing Claims, **characterized by** comprising connecting members (25, 26) for connecting the casing (12) to respective portions (3a, 3b) of an inlet pipe (3) of the dispensing device (1).

9. A silencer as claimed in one of the foregoing Claims, **characterized in that** the chamber (13) constitutes a void, all of which permits passage of water and has no partitions or other internal members.

10. A silencer as claimed in one of the foregoing Claims, **characterized in that** the cross section area of the chamber (13) is at least twice the cross section area of each opening (14, 15).

11. A silencer as claimed in one of the foregoing Claims, **characterized in that** the ratio between the cross section area of the chamber (13) and the cross section area of each opening (14, 15) ranges roughly between 2 and 400, and preferably between roughly 2 and 70.
